# EUROPEAN PATENT SPECIFICATION

(11) **EP 4 626 575 B1**
(45) Date of publication and mention of the grant of the patent: **30.09.2026**
(21) Application number: 23772358.0
(22) Date of filing: 23.08.2023
(51) Int. Cl.: B01D 19/04, D21H 21/12

(54) **DEFOAMER COMPOSITION**
ENTSCHÄUMERZUSAMMENSETZUNG
COMPOSITION D'AGENT ANTIMOUSSE

(30) Priority: 29.11.2022 US 202218059975
(43) Date of publication of application: 08.10.2025
(73) Proprietor: Kemira OYJ, Helsinki 00180 (FI)
(72) Inventor: ZOU, Yong, Atlanta, Georgia 30313 (US)
(74) Representative: Heinonen & Co
(86) International application number: PCT/US2023/030963
(87) International publication number: WO 2024/118121

(56) References cited:
- WO-A1-2015/037345
- CN-A- 113 577 836
- CN-B- 106 075 961
- US-A- 4 976 888
- US-A- 5 874 017
- US-A1- 2015 025 182

## Description

### Cross Reference

This application claims priority to U.S. Application Serial No. 18/059,975, filed November 29, 2022.

### Field of the Invention

This invention relates to defoaming compositions.

The defoaming composition is especially suitable in pulp and paper industry, as well as in any other processing industry when foaming is unwanted.

### Background

Defoamers are widely used in many industries including but not limited to pulp, paper, petroleum, textile and mining industries, water treatment, paints and coatings, food and beverage processing, and agriculture.

Defoamers are generally composed of a defoaming agent, such as, but not limited to ethylene bis(stearamides) (EBS) and/or hydrophobic silica, a carrier fluid, and other miscellaneous additives.

Defoamers have primarily two functions, these functions being defoaming and anti-foaming. Knockdown and persistence of defoamers provide important information about the performance of defoamers. Formation of foam in a solution decreases the density of the solution. Addition of a defoamer breaks the foam and the density of the solution increases again. The rate of the increase of the density due to the addition of a defoamer indicates how fast the defoamer acts, which is called the knockdown phase. The quicker the knockdown, the more efficient is the defoamer; however, the defoaming effect is temporary and with time, the defoamer begins to lose its efficacy and the density starts dropping again as the foam starts to regenerate. The longevity or persistence of a defoamer indicates how long the defoamer works. The longer the longevity or persistence of a defoamer, the more efficient is the defoamer. An ideal defoamer would have fast knockdown and long longevity or will persist over long time i.e. foam would disappear quickly upon addition of the defoamer and it would take long time for the foam to regenerate.

Currently in the pulp and paper industry, silicone-based defoamers are preferred over other defoamers due to lower dosage requirement and cost-effective performance.

Nonetheless, silicone based defoamers present themselves with inherent challenges and issues. These challenges are, in part, characterized by environmental and regulatory, carry over/deposit and cost efficiency issues and are further related to complex manufacturing processes. However, in order to increase the longevity of silicone defoamers one would need to use larger amounts of these defoamers in the process. This would in turn result in additional inherent problems due to presence of higher amounts of hydrophobic components, such as silicone compounds, in the process. Hydrophobic components exhibit a tendency to stick on the fiber, and excess amount of hydrophobic components would necessitate additional washing steps later in the process. Therefore, the amount of hydrophobic components in the end fiber needs to be limited and excess amount of silicone defoamers cannot be a reliable solution to limited longevity of the defoamers.

Various industries have long sought for a substitution for silicone-based defoamers, in part, as a potential goal to overcome the challenges experienced thus far with silicone-based defoamers. Water-based defoamers are an alternative, however, they are limited in applicability. Water-based defoamers generally comprise a long chain fatty alcohol and a hydrocarbon oil or wax or both. These defoamers are formulated as an oil-in-water emulsion by means of an emulsification process. Existing water based defoamers, however, still present challenges including significant loss of defoaming efficiency and effectiveness at high temperatures (75°C or higher), non-compliance with environmental or other regulations, or lack of storage stability, or combinations thereof. Examples of defoamers are disclosed in CN106075961B and US5874017A.

Therefore, there remains a need to develop novel and efficient defoamers that are environmentally friendly, cost effective, simple to make and are stable, but at the same time are characterized by displaying longer longevity along with displaying a fast knockdown phase even at high temperatures.

### Brief Summary

Provided herein are defoamer compositions comprising an aqueous phase and an organic phase emulsified in the aqueous phase and comprising at least one microcrystalline wax and at least one long chain fatty alcohol, the microcrystalline wax having a melting point of at least about 83°C and at least one long chain fatty alcohol having a carbon chain length of C₂₂ or more and a melting point of at least about 62 °C. Embodiments of this invention exhibit improved environmental regulatory compliance, improved food and beverage regulatory compliance, greater storage stability, or enhanced defoaming performance even at high temperatures, or combinations thereof. The inventive composition is defined in claim1.

Additional aspects will be set forth in part in the description which follows, and in part will be obvious from the description, or may be learned by practice of the aspects described herein. The advantages described herein may be realized and attained by means of the elements and combinations particularly pointed out in the appended claims. It is to be understood that both the foregoing general description and the following detailed description are exemplary and explanatory only and are not restrictive.

### Brief Description of the Drawings

**FIG. 1** depicts FEAT result graph from testing at 75°C a defoamer composition in accordance with an embodiment of the present invention along with comparative examples.
**FIG. 2** depicts an FEAT bar graph of defoaming performance from testing at 75°C the same defoamer composition in accordance with an embodiment of the present invention along with comparative examples as used to create the graph for Fig. 1.
**FIG. 3** depicts FEAT result graph from testing at 85°C a defoamer composition in accordance with an embodiment of the present invention along with comparative examples.
**FIG. 4** depicts an FEAT bar graph of defoaming performance from testing at 85°C the same defoamer composition in accordance with an embodiment of the present invention along with comparative examples as used to create the graph for Fig. 3.
**FIG. 5** depicts FEAT result graph from testing at 85°C a defoamer composition in accordance with an embodiment of the present invention to demonstrate the effect of dosage.
**FIG. 6** depicts a graph of storage stability from testing viscosity over time at 5°C, room temperature, and 40°C of a defoamer composition in accordance with an embodiment of the present invention.

### Detailed Description

Embodiments of the present invention described herein include defoaming compositions which are water-based emulsions and may be used effectively and efficiently in relatively high temperature industrial process streams. Embodiments of the present invention include defoaming compositions which exhibit improved environmental regulatory compliance, improved food and beverage regulatory compliance, greater storage stability, or enhanced defoaming performance even at high temperatures, or combinations thereof.

### Defoaming Compositions

Generally, defoaming compositions according to embodiments of the present invention comprise an aqueous phase and an organic phase emulsified in the aqueous phase and comprise at least one long chain fatty alcohol and at least one microcrystalline wax and at least one long chain fatty alcohol, the microcrystalline wax having a melting point of at least about 83°C and the at least one long chain fatty alcohol having a carbon chain length of C₂₂ or more and a melting point of at least about 62 °C.

The long chain fatty alcohols according to embodiments of this invention include C₂₂ to C₂₈. These alcohols include natural and synthesized fatty alcohols. Said fatty alcohols may be selected from the group consisted of C₂₂ alcohol, C₂₄ alcohol, C₂₆ alcohol, C₂₈ alcohol, which have a single carbon atom number respectively. Alternatively, the fatty alcohols may be selected from mixed fatty alcohols that have different numbers of carbon atoms having a carbon chain length as mentioned above. If synthetic alcohols are to be used, the fatty alcohols can be obtained from alkyl aluminum oxide through a Ziegler process, and also can be obtained by carbonyl synthesis. Usually, fatty alcohols obtained through such a process are mixed and saturated straight chain alcohols.

Suitable long chain fatty alcohols according to embodiments of this invention have a melting point of at least about 62 °C or from about 62 °C to about 67 °C.

Defoamer compositions according to embodiments of this invention include the at least one long chain fatty alcohol present in the defoamer composition at an amount of about 8 % to about 30 %, by weight, based on the weight of the defoamer composition, or about 10 % to about 20 %, by weight, based on the weight of the defoamer composition.

Suitable microcrystalline wax according to embodiments of this invention include microcrystalline wax having a melting point from about 83°C to about 99°C or from about 85°C to about 99°C or from about 90°C to about 99°C or greater than about 90°C. Defoamer compositions according to embodiments of this invention include the at least one microcrystalline wax in the defoamer composition at an amount of about 5 % to about 25 %, by weight based on the weight of the defoamer composition, or at an amount of about 6 % to about 15 %, by weight based on the weight of the defoamer composition.

The defoamer compositions according to embodiments of this invention may further comprise at least one emulsifier or a combination of emulsifiers. Suitable emulsifiers according to embodiments of this invention include surfactants which may be anionic or non-ionic surfactants or both. Furthermore, suitable surfactants according to embodiments of this invention include polyethers. Non-ionic surfactants may be present in the defoamer composition according to embodiments of this invention in an amount from about 0.01% to about 10% by weight of the defoamer composition. Suitable anionic surfactants according to embodiments of this invention may include dodecyl polyoxyethylene ether sodium sulfate, sodium dodecyl sulfate, sodium dodecyl benzene sulfonate, sodium dodecyl sulfate, sodium hexadecyl sulfate, sodium hexadecyl benzene sulfonate, and dodecyl diphenyl ether sodium disulfonate, and the like. Anionic surfactants may be present in the defoamer composition according to embodiments of this invention in an amount from about 0.01% to about 5% by weight of the defoamer composition.

The defoamer compositions according to embodiments of this invention may further have biocontent of at least 50% or at least 60%. Biocontent means the amount of bio-based carbon in the material or product as a % of weight (mass) of the total organic carbon in the material or product determined by testing representative samples using American Society for Testing and Materials specification D6866. Bio-based carbon means new carbon such as carbon directly from plants as opposed to fossil fuel based organic carbon. Total organic carbon includes both new carbon and fossil fuel based carbon.

The defoamer compositions according to embodiments of this invention may perform as a defoamer at a temperature of at least 75°C, or at least 85°C, or at least 90°C, or at a temperature from 75°C to 95°C or at a temperature from 85°C to 95°C. Such high temperature performance is unexpected because conventional water-based defoamer compositions typically perform well as a defoamer at relatively low temperature, such as less than 75°C, and not as well at higher temperatures such as 75°C or higher. The defoamer compositions according to embodiments of this invention exhibit a fast knockdown and longevity or persistence in foam suppression based on FEAT results even at temperatures from 75°C to 95°C.

Defoamer compositions according to embodiments of this invention are relatively stable, meaning that they retain much of their viscosity for extended storage times. For example, embodiments of this invention exhibit a viscosity < 1500 cP when stored for up to 100 days at a temperature of about 40°C, or exhibits a viscosity < 900 cP when stored for up to 100 days at a temperature of about 23°C, or exhibits a viscosity < 800 cP when stored for up to 100 days at a temperature of about 5°C.

Defoamer compositions according to embodiments of this invention may not contain one or a more of oil, silicone fluid, silica, or ethylene bis stearamide. Defoamer compositions according to embodiments of this invention may not contain oil, silicone fluid, silica, or ethylene bis stearamide or any combination thereof. Accordingly, defoamer compositions according to embodiments of this invention may be more likely regulatory compliant, such as compliant with environmental regulations or with Food and Drug Administration or BfR regulations so as to be suitable in food and beverage applications.

### Method for Making Defoaming Compositions

Generally, defoaming compositions according to embodiments of the present invention may be made by a method comprising the steps of: heating a mixture comprising water, at least one microcrystalline wax, and at least one long chain fatty alcohol sufficiently to liquefy any solids, the microcrystalline wax having a melting point of at least about 83°C and the at least one long chain fatty alcohol having a carbon chain length of C₂₂ or more and a melting point of at least about 62 °C; adding at least one emulsifier and at least one surfactant to the mixture; and homogenizing the mixture to form an emulsion comprising an organic phase emulsified into an aqueous phase.

The emulsions of the present invention comprise organic phase droplets in a continuous aqueous phase. The organic phase droplets include the at least one long chain fatty alcohol and the at least one microcrystalline wax. The term "emulsion" refers to a combination of at least two liquids, where one of the liquids is present in the form of droplets in the other liquid. See, IUPAC, Compendium of Chemical 55 Terminology: IUPAC Recommendations, 2d ed., compiled by A. D. McNaught and A. Wilkinson, Blackwell, Oxford (1997).

The emulsion can comprise the aqueous phase and organic phase in any amounts by weight that facilitate defoaming.

The method of making a defoamer composition according to embodiments of this invention further comprises adding a sizing agent such as fortified rosin to the mixture before the homogenizing step.

The method of making a defoamer composition according to embodiments of this invention further comprises adding a thickener to the emulsion. The thickening agent according to embodiments of this invention is mainly used to adjust the viscosity of the emulsion, so as to improve the stability of the emulsion. Suitable thickening agents according to embodiments of this invention include xanthan gum, guar gum, polyvinyl alcohol, sodium carboxymethyl cellulose, hydroxyethyl cellulose, polyacrylic acid, polyacryl amide, polyacrylates, and the like. Thickening agents may be present in the defoamer composition according to embodiments of this invention in an amount from about 0.1% to about 2.0% by weight of the defoamer composition, or from about 0.2% to about 1.0% by weight of the defoamer composition.

The method of making a defoamer composition according to embodiments of this invention further comprises adding a adding a biocide to the emulsion. A biocide is an antimicrobial chemical substance that can deter, render harmless, or exert a controlling effect on any harmful organism. Examples of non-oxidizing biocides useful in the compositions of the present invention, particularly for use in the pulp and paper making processes, include, for instance, 2-bromo-2-nitropropane-1,3-diol, 5-chloro-2-methyl-4-iso- thiazolin-3-one, DBNPA, n-octyl-isothiazolin-3-one, MBT, quaternary animonium compounds, THPS and glutaraldehyde. In an embodiment, the biocide is selected from the group consisting of glutaraldehyde, 2,2-dibromo-3-nitrilo-propionamide (DBNPA), 2-bromo-2-nitropropane-1,3-diol (Bronopol ), 5-chloro-2-methy 1-4-isothiazolin-3-one (CMIT), n-alkyl dimethyl benzyl ammonium chloride, dide-cyl dimethyl ammonium chloride (DDAC), alkenyl dim-ethylethyl ammonium chloride, tetrakis hydroxymethyl phosphonium sulfate (THPS). The biocide is usually present in the emulsion, if at all, in an amount of from about 0.05% to about 1.0%, by weight of the emulsion, or about 0.1% to about 0.5%, by weight of the emulsion.

### Method for Defoaming An Industrial Process Stream

Generally, defoaming compositions according to embodiments of the present invention may be used for defoaming in an industrial process stream in a method comprising the step of adding to the industrial process stream a defoamer composition in an amount effective to defoam or prevent foaming in the industrial process stream, the defoamer composition comprising: an aqueous phase; and an organic phase emulsified in the aqueous phase and comprising at least one microcrystalline wax and at least one long chain fatty alcohol, the microcrystalline wax having a melting point of at least about 83°C and the at least one long chain fatty alcohol having a carbon chain length of C₂₂ or more and a melting point of at least about 62°C.

Defoaming methods according to embodiments of the present invention can be practiced in any industrial process in which foaming is a concern, including process streams commonly encountered when processing or manufacturing wood pulp, paper, textiles, cement or paint, in addition to processes for treating industrial wastewater, food processing, and oil drilling. The methods can be used in practically any industrial water system where foaming is a problem, but are particularly well-adapted to recirculating water systems as found in papermaking systems, cooling water systems (including cooling towers, open and closed loop cooling units), industrial raw water systems, drinking water distribution systems, sanitizing drinking water system, oil production or recovery systems (oil field water system, drilling fluids), fuel storage system, metal working systems, heat exchangers, reactors, equipment used for storing and handling liquids, boilers and related steam generating units, radiators, flash evaporating units, refrigeration units, reverse osmosis equipment, gas scrubbing units, blast furnaces, sugar evaporating units, steam power plants, geothermal units, nuclear cooling units, water treatment units, pool recirculating units, mining cir-cuits, closed loop heating units, machining fluids used in operations such as for example drilling, boring, milling, reaming, drawing, broaching, turning, cutting, sewing, grinding, thread cutting, shaping, spinning and rolling, hydraulic fluids, cooling fluids, and the like. In some embodiments, the industrial process stream is an industrial process stream in a cement-making process or a paint making process.

In one embodiment the defoamer compositions and/or emulsions disclosed herein are added or dosed to a pulp and/or paper processing system. The composition can be generally utilized throughout the system to minimize and to prevent foam. In certain examples, the composition is added in a short loop of the system. Other examples of suitable addition points are large storage towers for process water (circulating water towers, filtrate water towers), clear or cloudy filtrate storage tanks, pulpers or process streams upstream/downstream of the pulpers, broke system or pro-cess streams upstream/downstream of vessels therein, wire pit process streams upstream/downstream of the pit, paper machine blend chest process streams upstream/downstream of the chest, fresh water tank, warm water tank and shower water tank. Suitable addition points for a pulp mill system include the digester, the brown stock stream, washers (such as the brown stock washer), the black liquor stream in a Kraft process, or the red or brown liquor in a sulfite process. The composition can be dosed continuously or periodically as a batch process. The composition can be fed for about 3 to about 45 minutes each about 6 to about 24 times a day, or for example for about 10 to about 30 minutes for about 12 to about 24 times a day.

Additional details about particular industrial processes are provided below for reference.

### Paper-Making Processes

In the paper industry, the Kraft process is a frequently used alkaline pulping process. Spent chemicals in the process can be recycled and reused thus decreasing processing costs. A large disadvantage of this process is the occurrence of foam during the pulp screening and washing procedures.

The Kraft process (as taught in U.S. Pat. No. 3,215,635 to Liebling, for instance) first cooks the wood chips in digesters and then draws off the spent chemicals for reuse. The resulting pulp fibers are then washed free of a large amount of residual chemicals in brown stock washers. These washers are a series of vats usually three or four in number that alternatively dilute the pulp with water and thicken it by picking it up on large rotary screens. From the brown stock washers, the pulp travels to the screen room where it is again diluted with water and put through vibrating screens that accept the now completely delignified fibers and reject the clumps of unpulped fibers, knots, and other foreign material. Foam problems can be severe in the screen room, because the diluted pulp is subjected to violent agitation by the screens. The water removed from the pulp after the screening operations is referred to as the dilute black liquor and, for the sake of economy, is normally used as the dilution water for the third and fourth stage of the brown stock washers. The dilute black liquor is a foaming material, containing, for example, from about 0.001 % to about 0.1 % by weight of solids and having a pH of about 12. The foaming of the dilute black liquor increases along with the resin content of the wood used in this process.

Defoamers can be used in alkaline pulp mills during the screening operations so that a more efficient screening is accomplished and to prevent the pulp thickeners, used after the screening operations from becoming clogged with entrapped air. When water-dispersible defoamers are used during the screening operation, the control of foam and entrained air in the screening operation contributes to the washing efficiency of the pulp during the alkaline pulping process. This occurs because the screening efficiency of the pulp is increased, allowing ease of flow of the pulp throughout the thickeners and subsequent washers.

De-inking detergents used to de-ink paper in paper recycling operations can also cause significant defoaming problems. Detailed descriptions of such processes are found in standard textbooks, such as A. M. Schwartz and J. W. Perry, SURFACE ACTIVE AGENTS, Vol. I (1949); and SURFACE ACTIVE AGENTS AND DETERGENTS, Vol. II (1958), Interscience Publish-ers, New York.

The de-inking agents, in amounts ranging from about 0.3 to about 3 percent based on the weight of the paper, are used in solution in substantially aqueous media. The temperature of the de-inking solution can vary anywhere from room temperature, including about 40° F. to about 70° F. (about 4° C. to about 20° C.), up to about 200° F. (about 95° C.). The processes are generally performed at an alkaline pH (i.e. from about 7.0 and about 11.5). In general, the percent of cellulosic by weight of the aqueous de-inking solution should be below 10 percent and preferably below 6.0 percent, or between about 4.0 and 6.0 percent.

Following deinking treatment, the defibered material is dropped to a chest or other reservoir, after which it is diluted with water to a solids content of between about 0.5 and about 1.5 percent (including about 1.0 percent), based upon the solution weight. Following dilution, the pulp is separated from the solution and washed and thickened by well-known methods. Optionally, the pulp is then acidified to a pH of between about 4 and about 6.5 (including about 4.5 to about 5.5), thickened and then formed into a web. The recovered stock can be blended with fresh virgin sulfate or sulfite stock, or with additional recovered stock to make cellulosic articles, such as newspaper and so forth. The defoamer can be added during any of the foregoing stages to control or prevent foam formation.

### Cement-Making Processes

The reliable administration of defoaming chemistries is also a key step in preventing excessive foaming and avoiding operational difficulties due to entrained air in cementing applications. Most chemical additives needed to make cement slurries are surface active molecules with an amphiphilic structure; on one hand soluble and on the other insoluble (or of limited solubility) in aqueous phase. This surfactancy is responsible for the stabilization of air-liquid interfaces and the potential generation of excessive foam and air. Such additives include cement retarders, dispersants, fluid loss control additives, gas migration control agents and ductility improvement additives. Chemicals used to enhance cement grinding are also known to cause foaming to some extent.

Origins of air in cement slurries include air already contained in the system and air entrapped during mixing. This is a complex process, which is affected by many factors such as the mixing regime, physical and chemical properties of oil well cements, water ratio and quality, dosage and properties of the foaming agent, other chemical additives and supplementary cementious materials (SCMs), and a range of other parameters. The defoamers of the present invention can be added at any time during the cement making sequence. They can be added to the water or the cement powder before the water and powder are mixed, or they can be added to the wet cement after the water and powder have been mixed.

### Textile-Making Processes

Defoamers are also employed in textile wet processing during scouring, desizing, bleaching and dyeing operations. The scouring, desizing and bleaching operations used in textile processing to remove foreign materials such as warp size, processing oil, dirt and natural waxes from the fabric, often use detergents that create foam. These operations are performed before dyeing to ensure a well-prepared substrate hat will accept dye evenly.

Traditional defoamers redeposit insoluble materials on the fabrics during processing. If the insoluble materials are not removed before dyeing they can create resist spots in the fabrics where the dye does not penetrate or in the case of some synthetic fibers, oil spots where the fabric will actually dye darker in that spot. The defoamers of the present invention do not have this problem. They defoam during the higher temperature part of the process that employs the foaming surfactants and are subsequently rinsed out at a later stage in the process at lower temperatures.

Textile dyeing processes also employ surfactants that foam as wetting agents and after scouring agents to remove loose dye stuff. Foam must be controlled during the dyeing process with materials that do not redeposit on the fabrics. The defoamer compositions disclosed herein also have application during the dyeing process where the actual dyeing will take place at a higher temperature employing the disclosed defoamers, and then the goods will subsequently be rinsed clean at a lower temperature.

The defoamer compositions according to embodiments of this invention may be added to the industrial process stream and perform as a defoamer when the industrial process stream is at a temperature of at least 75°C, or at least 85°C, or at least 90°C, or at a temperature from 75°C to 95°C or at a temperature from 85°C to 95°C.

The present invention is further illustrated by the following examples, which are not to be construed in any way as imposing limitations upon the scope thereof.

### Example 1 - high temperature water-based defoamer composition according to an embodiment of the present invention

In this example, a defoamer composition in accordance with an embodiment of this invention is made in the form of an aqueous emulsion in accordance with the formula in Table A below. The ingredient amounts are shown in parts by weight. The process for making the defoamer composition is as follows: (A) Adding hot water, long chain fatty alcohol, microcrystalline wax, biowax, an emulsifier and salt into a reactor, and heating the reactor to 90-98°C with stirring; (B) Adding fortified rosin and emulsifiers into the reactor when all solids are melted under stirring at 90-98°C and mixing 0.5-1.0 hr; (C) Adding an anionic surfactant into the reactor with stirring at 90-98°C for 2-10 minutes; (D) Homogenizing the emulsion solution from (C) immediately at 6500-8500 rpm for 30 to 90 seconds; (E) Adding a thickener into (D) the homogenized emulsion solution under stirring for 2-8 minutes; (F) then adding cold water, quickly cooling the emulsion solution down by ice water under stirring for 10-20 minutes; (G) Adding sodium nitrite, a biocide with stirring for 0.5-1hr finally.

**Table A. Example 1 Defoamer Composition Recipe**

| **Ingredient** | **Amount in Weight %** |
|---|---|
| Hot tap water | 50 |
| Vegarol^{™} 2280 long chain fatty alcohol (Behenyl alcohol) | 11.14 |
| Sasolwax 0907 microcrystalline wax | 7.13 |
| TERGITOL^{™} 15-S-40 (70%) surfactant | 1.6 |
| Glyceryl monostearate emulsifier | 1.25 |
| Ticaloid^{™} 5415 gum | 0.36 |
| SERMUL^{™} EA 266 anionic surfactant | 1.07 |
| AMA-420^{™} antimicrobial agent | 0.20 |
| NaCl | 1.13 |
| SURFYNOL^{®} 355 surfactant | 0.45 |
| Hydrogenated Castor Oil | 1.02 |
| N-850-P rosin sizing agent | 1.13 |
| Sodium Nitrite 99% | 0.12 |
| Cold Tap Water | 23.41 |
| | |
| Total (Weight %) | 100.00 |
| Viscosity (cP) | 360 |
| Total Solids | 24.59 |
| Biocontent in Total Solids (%) | 63.35 |

### Foam Elimination and Suppression Performance Test

The foam elimination and suppression performance the defoamer compositions in the embodiment from Example 1 and comparative defoamer compositions (Comparative Examples) are tested with the following method. The comparative defoamer compositions are commercially available and sourced from Kemira Oyj, based in Helsinki, Finland and include: Kemira FT1950 (water based defoamer, Comparative Example 1), FT4869 (Oilbased Defoamer, Comparative Example 2), FT6016 (Silicone emulsion defoamer, Comparative Example 3), and FT6006 (Silicone emulsion defoamer, Comparative Example 4).

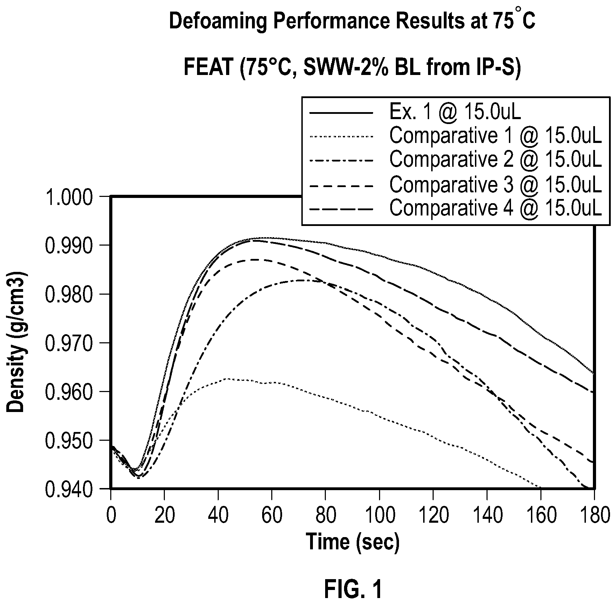

Foam and Entrained Air Tests (FEAT) were performed to test the defoaming performance of the embodiment from Example 1 and the Comparative Examples and the results are shown in Figs. 1-5. The FEAT method records density vs time and these defoaming compositions were tested with foaming media of Synthetic White Water-2% Black Liquor from IP Savanna, GA (pH=5.70) at 75°C and 85°C, and 40% power.

The FEAT test employs a testing apparatus which is used to determine the efficacy of defoamer compositions in a laboratory setting. The apparatus measures the change in the density as a function of time of the filtrate as the defoamer composition is introduced. The measure of the change in density of a filtrate is a direct measurement of the change in entrained air. In pulp and paper mills, for example, presence of entrained air can disturb sheet formation and drainage.

The experimental set up contains a water bath, temperature control, a foam column, a micropump, a density meter, a computer, and acquisition software. Testing of the samples utilizes a recirculatory foam column attached to a pump. The hose leading from the pump is connected to a density meter, which is connected back to the top of the foam column. The foaming medium is added to the test unit and pumped through the unit to fill the lines. Once the pump is turned on and the density drops due to air entrainment, a defoamer composition is added. The test is run for a predetermined time and adequate number of data points are collected by the data acquisition software. A line graph is generated to show the change in density of the liquor of the time period. The area under the curve for each test is then calculated. Those samples having the highest area under the curve measurements are those samples that performed the best.

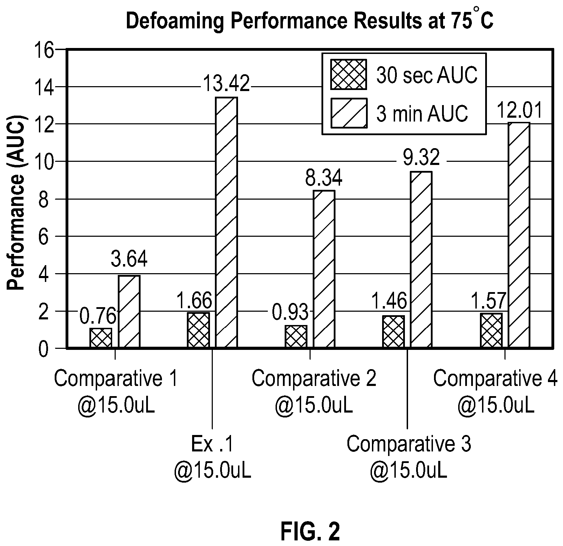

For Example 1 and the Comparative Examples, white water was used as the foaming medium. The results shown in Figs. 1 and 2 were obtained by heating 400 ml of the foaming medium to 75° C and circulating the heating foaming medium. As the foaming medium was circulated, the density of the medium dropped due to formation of foams.

The defoamer composition of Example 1 shows improved efficacy relative to the Comparative Example defoamer compositions at 75°C.

15 µL of each defoamer composition was added to the defoaming medium when the medium density reached a desired minimum point. As seen in Fig. 1, the density, i.e. knockdown phase, increased rapidly to a maximum density of approximately 0.992 g/cm3 for the defoamer composition of Example 1 within about 50 seconds. Thereafter, the density dropped gradually. The performance as measured by Area Under Curve (AUC) shown in Fig. 2 confirmed these findings, where the defoamer composition of Example 1 displayed the highest performance after 30 seconds and 3 minutes compared to the defoamer compositions of the Comparative Examples.

Likewise, the defoamer composition of Example 1 shows improved efficacy relative to the Comparative Example defoamer compositions at 85°C.

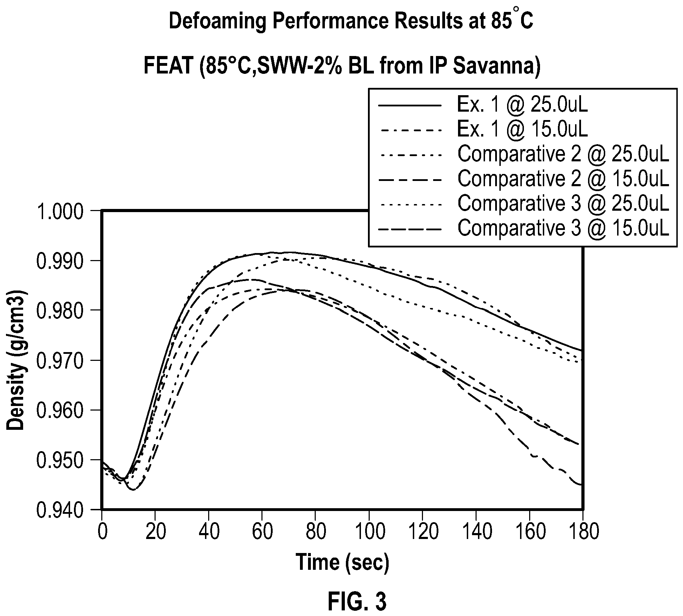

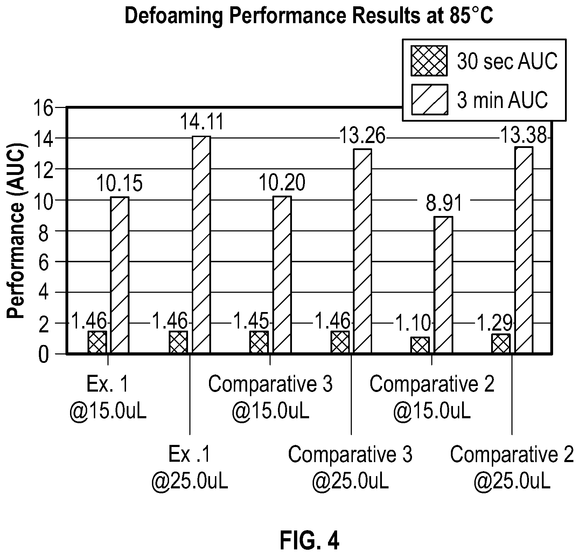

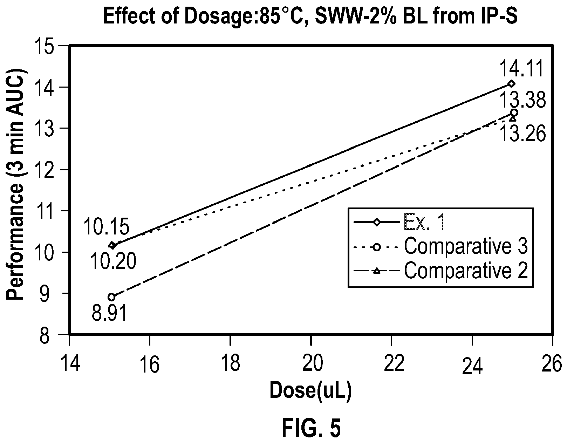

The same process was used to obtain the data shown in Figs. 3, 4, and 5 as in Figs. 1 and 2 except the defoamer performance was tested at 85°C and with the addition of 15 µL of each defoamer composition in one set and 25 µL of each defoamer composition in another set. As seen in Fig. 3, the density, i.e. knockdown phase, after addition of 15 µL of each defoamer composition increased rapidly to a maximum density of approximately 0.992 g/cm3 for the defoamer composition of Example 1 within about 50 seconds and, after addition of 25 µL of each defoamer composition increased rapidly to a maximum density of approximately 0.984 g/cm3 for the defoamer composition of Example 1 within about 50 seconds. Thereafter, the density dropped gradually. The performance as measured by Area Under Curve (AUC) shown in Figs. 4 and 5 confirmed these findings, where the defoamer composition of Example 1 displayed the comparable or better performance after 30 seconds and 3 minutes compared to the defoamer compositions of the Comparative Examples. In addition, Fig. 5 shows the performance relative to defoamer composition dosing at 15 µL and 25 µL.

### Stability Performance Test

The stability of the defoamer compositions in the embodiment from Example 1 and Comparative Examples are tested with the following method.

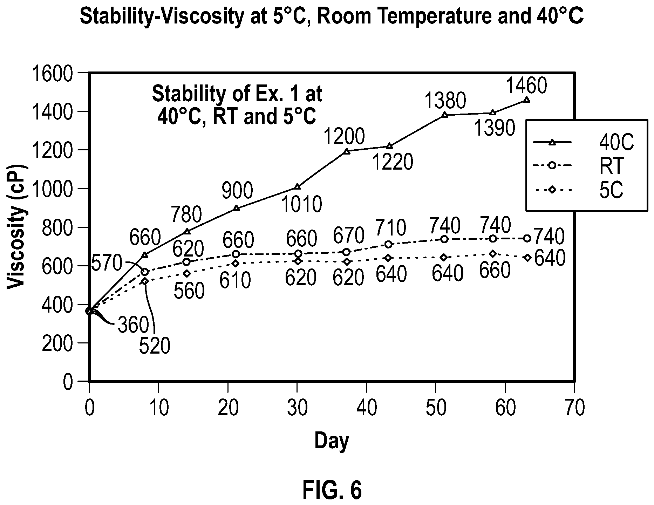

An NDJ-8 viscosity tester is used and the test is conducted under the conditions of 2# rotor and 6 rpm. In that test mode, the measurement range is 0-5000 mPa·s. The viscosity change of the emulsion is measured after being stored at 5° C., room temperature (about 25°C), and 40° C for up to about 70 days. The test results are shown in Fig. 6 and it can be seen that the emulsion prepared with the method according to Example 1 has superior storage stability.

In the descriptions provided herein, the terms "includes," "is," "containing," "having," and "comprises" are used in an open-ended fashion, and thus should be interpreted to mean "including, but not limited to." When compositions, systems, or methods are claimed or described in terms of "comprising" various steps or components, the compositions, systems, or methods can also "consist essentially of" or "consist of" the various steps or components, unless stated otherwise.

The terms "a," "an," and "the" are intended to include plural alternatives, e.g., at least one. For instance, the disclosure of "a first monomer", "a polymer composition", and the like, is meant to encompass one, or mixtures or combinations of more than one first monomer, polymer composition, and the like, unless otherwise specified.

Various numerical ranges may be disclosed herein. When Applicant discloses or claims a range of any type, Applicant's intent is to disclose or claim individually each possible number that such a range could reasonably encompass, including end points of the range as well as any sub-ranges and combinations of sub-ranges encompassed therein, unless otherwise specified. Moreover, all numerical end points of ranges disclosed herein are approximate. As a representative example, Applicant discloses, in some embodiments, that defoamer compositions have efficacy at temperatures from 85°C to 95°C. This range should be interpreted as encompassing temperatures of about 85°C and about 95°C, and further encompasses "about" each of 86°C, 87°C, 88°C, 89°C, 90°C, 91°C, 92°C, 93°C, and 94°C, including any ranges and sub-ranges between any of these values.

As used herein, the term "about" means plus or minus 10% of the numerical value of the number with which it is being used.

## Claims

1. A defoamer composition comprising:
an aqueous phase; and
an organic phase emulsified in the aqueous phase and comprising at least one microcrystalline wax and at least one long chain fatty alcohol, the microcrystalline wax having a melting point of at least about 83°C and the at least one long chain fatty alcohol having a carbon chain length of C₂₂ or more and a melting point of at least about 62 °C,
wherein at least 80% by weight of the at least one long chain fatty alcohol has a carbon chain length from C₂₂ to C₂₈;
wherein the at least one long chain fatty alcohol is present in the defoamer composition at an amount of about 8 % to about 30 %, by weight, based on the weight of the defoamer composition, and
wherein the at least one microcrystalline wax is present in the defoamer composition at an amount of about 5 % to about 25 %, by weight, based on the weight of the defoamer composition.

2. The defoamer composition of claim 1, wherein the at least one long chain fatty alcohol has a melting point from about 62 °C to about 67 °C.

3. The defoamer composition of claim 1, wherein the at least one long chain fatty alcohol is present in the defoamer composition at an amount of about 10 % to about 20 %, by weight, based on the weight of the defoamer composition.

4. The defoamer composition of claim 1, wherein the microcrystalline wax has a melting point of at least about 90°C.

5. The defoamer composition of claim 1, wherein the microcrystalline wax has a melting point from about 83°C to about 99°C or from about 85°C to about 99°C or from about 90°C to about 99°C.

6. The defoamer composition of claim 1, wherein the at least one microcrystalline wax is present in the defoamer composition at an amount of about 6 % to about 15 %, by weight, based on the weight of the defoamer composition.

7. The defoamer composition of claim 1 further comprising at least one emulsifier.

8. The defoamer composition of claim 1 further comprising at least one surfactant.

9. The defoamer composition of claim 1 wherein the defoamer composition has a biocontent of at least 50% or at least 60%.

10. The defoamer composition of claim 1 wherein the defoamer composition performs as a defoamer at a temperature of at least 75°C.

11. The defoamer composition of claim 1 wherein the defoamer composition performs as a defoamer at a temperature from 75°C to 95°C.

12. The defoamer composition of claim 1, wherein the defoamer composition exhibits a viscosity < 1500 cP when stored for up to 100 days at a temperature of about 40°C, or exhibits a viscosity < 900 cP when stored for up to 100 days at a temperature of about 23°C, or exhibits a viscosity < 800 cP when stored for up to 100 days at a temperature of about 5°C.

13. The defoamer composition of claim 1 wherein the defoamer composition does not contain oil.

14. The defoamer composition of claim 1 wherein the defoamer composition does not contain silicone fluid.

15. The defoamer composition of claim 1 wherein the defoamer composition does not contain oil, silicone fluid, silica, or ethylene bis stearamide.

## Patentansprüche

1. Entschäumerzusammensetzunag, umfassend:
eine wässrige Phase; und
eine organische Phase, die in der wässrigen Phase emulgiert ist und mindestens ein mikrokristallines Wachs sowie mindestens einen langkettigen Fettalkohol umfasst, wobei das mikrokristalline Wachs einen Schmelzpunkt von mindestens etwa 83 °C aufweist und der mindestens eine langkettige Fettalkohol eine Kohlenstoffkettenlänge von C₂₂ oder mehr und einen Schmelzpunkt von mindestens etwa 62 °C aufweist,
wobei mindestens 80 Gewichts-% des mindestens einen langkettigen Fettalkohols eine Kohlenstoffkettenlänge von C₂₂ bis C₂₈ aufweisen;
wobei der mindestens eine langkettige Fettalkohol in der Entschäumerzusammensetzung in einer Menge von etwa 8 Gewichts-% bis etwa 30 Gewichts-%, basierend auf dem Gewicht der Entschäumerzusammensetzung, vorhanden ist, und
wobei das mindestens eine mikrokristalline Wachs in der Entschäumerzusammensetzung in einer Menge von etwa 5 Gewichts-% bis etwa 25 Gewichts-%, basierend auf dem Gewicht der Entschäumerzusammensetzung, vorhanden ist.

2. Entschäumerzusammensetzung nach Anspruch 1, wobei der mindestens eine langkettige Fettalkohol einen Schmelzpunkt von etwa 62 °C bis etwa 67 °C aufweist.

3. Entschäumerzusammensetzung nach Anspruch 1, wobei der mindestens eine langkettige Fettalkohol in der Entschäumerzusammensetzung in einer Menge von etwa 10 Gewichts-% bis etwa 20 Gewichts-%, basierend auf dem Gewicht der Entschäumerzusammensetzung, vorhanden ist.

4. Entschäumerzusammensetzung nach Anspruch 1, wobei das mikrokristalline Wachs einen Schmelzpunkt von mindestens etwa 90 °C aufweist.

5. Entschäumerzusammensetzung nach Anspruch 1, wobei das mikrokristalline Wachs einen Schmelzpunkt von etwa 83 °C bis etwa 99 °C oder von etwa 85 °C bis etwa 99 °C oder von etwa 90 °C bis etwa 99 °C aufweist.

6. Entschäumerzusammensetzung nach Anspruch 1, wobei das mindestens eine mikrokristalline Wachs in der Entschäumerzusammensetzung in einer Menge von etwa 6 Gewichts-% bis etwa 15 Gewichts-%, basierend auf dem Gewicht der Entschäumerzusammensetzung, vorhanden ist.

7. Entschäumerzusammensetzung nach Anspruch 1, ferner umfassend mindestens einen Emulgator.

8. Entschäumerzusammensetzung nach Anspruch 1, ferner umfassend mindestens ein Tensid.

9. Entschäumerzusammensetzung nach Anspruch 1, wobei die Entschäumerzusammensetzung einen Bioanteil von mindestens 50 % oder mindestens 60 % aufweist.

10. Entschäumerzusammensetzung nach Anspruch 1, wobei die Entschäumerzusammensetzung bei einer Temperatur von mindestens 75 °C als Entschäumer auftritt.

11. Entschäumerzusammensetzung nach Anspruch 1, wobei die Entschäumerzusammensetzung bei einer Temperatur von 75 °C bis 95 °C als Entschäumer auftritt.

12. Entschäumerzusammensetzung nach Anspruch 1, wobei die Entschäumerzusammensetzung beim Speichern für bis zu 100 Tage bei einer Temperatur von etwa 40 °C eine Viskosität von < 1500 cP zeigt oder beim Speichern für bis zu 100 Tage bei einer Temperatur von etwa 23 °C eine Viskosität von < 900 cP zeigt, oder beim Speichern für bis zu 100 Tage bei einer Temperatur von etwa 5 °C eine Viskosität von < 800 cP zeigt.

13. Entschäumerzusammensetzung nach Anspruch 1, wobei die Entschäumerzusammensetzung kein Öl enthält.

14. Entschäumerzusammensetzung nach Anspruch 1, wobei die Entschäumerzusammensetzung keine Silikonflüssigkeit enthält.

15. Entschäumerzusammensetzung nach Anspruch 1, wobei die Entschäumerzusammensetzung kein Öl, keine Silikonflüssigkeit, kein Siliziumdioxid oder Ethylenbisstearamid enthält.

## Revendications

1. Composition d'agent antimousse comprenant :
une phase aqueuse ; et
une phase organique émulsionnée dans la phase aqueuse et comprenant au moins une cire microcristalline et au moins un alcool gras à longue chaîne, la cire microcristalline ayant un point de fusion d'au moins 83 °C environ et l'au moins un alcool gras à longue chaîne ayant une longueur de chaîne carbonée de C₂₂ ou plus et un point de fusion d'au moins environ 62 °C,
dans laquelle au moins 80 % en poids de l'au moins un alcool gras à longue chaîne a une longueur de chaîne carbonée de C₂₂ à C₂₈ ;
dans laquelle l'au moins un alcool gras à longue chaîne est présent dans la composition d'agent antimousse en une quantité d'environ 8 % à environ 30 % en poids, sur la base du poids de la composition d'agent antimousse, et
dans laquelle l'au moins une cire microcristalline est présente dans la composition d'agent antimousse en une quantité d'environ 5 % à environ 25 % en poids, sur la base du poids de la composition d'agent antimousse.

2. Composition d'agent antimousse selon la revendication 1, dans laquelle l'au moins un alcool gras à longue chaîne a un point de fusion d'environ 62 °C à environ 67 °C.

3. Composition d'agent antimousse selon la revendication 1, dans laquelle l'au moins un alcool gras à longue chaîne est présent dans la composition d'agent antimousse en une quantité d'environ 10 % à environ 20 % en poids, sur la base du poids de la composition d'agent antimousse.

4. Composition d'agent antimousse selon la revendication 1, dans laquelle la cire microcristalline a un point de fusion d'au moins environ 90 °C.

5. Composition d'agent antimousse selon la revendication 1, dans laquelle la cire microcristalline a un point de fusion d'environ 83 °C à environ 99 °C ou d'environ 85 °C à environ 99 °C ou d'environ 90 °C à environ 99 °C.

6. Composition d'agent antimousse selon la revendication 1, dans laquelle l'au moins une cire microcristalline est présente dans la composition d'agent antimousse en une quantité d'environ 6 % à environ 15 % en poids, sur la base du poids de la composition d'agent antimousse.

7. Composition d'agent antimousse selon la revendication 1 comprenant en outre au moins un émulsifiant.

8. Composition d'agent antimousse selon la revendication 1 comprenant en outre au moins un tensioactif.

9. Composition d'agent antimousse selon la revendication 1 dans laquelle la composition d'agent antimousse a un contenu biosourcé d'au moins 50 % ou d'au moins 60 %.

10. Composition d'agent antimousse selon la revendication 1 dans laquelle la composition d'agent antimousse agit comme un agent antimousse à une température d'au moins 75 °C.

11. Composition d'agent antimousse selon la revendication 1 dans laquelle la composition d'agent antimousse agit comme un agent antimousse à une température de 75 °C à 95 °C.

12. Composition d'agent antimousse selon la revendication 1, dans laquelle la composition d'agent antimousse présente une viscosité < 1500 cP lorsqu'elle est stockée pendant une durée pouvant aller jusqu'à 100 jours à une température d'environ 40 °C, ou présente une viscosité < 900 cP lorsqu'elle est stockée pendant une durée pouvant aller jusqu'à 100 jours à une température d'environ 23 °C, ou présente une viscosité < 800 cP lorsqu'elle est stockée pendant une durée pouvant aller jusqu'à 100 jours à une température d'environ 5 °C.

13. Composition d'agent antimousse selon la revendication 1, dans laquelle la composition d'agent antimousse ne contient pas d'huile.

14. Composition d'agent antimousse selon la revendication 1, dans laquelle la composition d'agent antimousse ne contient pas de fluide de silicone.

15. Composition d'agent antimousse selon la revendication 1, dans laquelle la composition d'agent antimousse ne contient pas d'huile, de fluide de silicone, de silice ou de bis-stéaramide d'éthylène.
